(19) Europäisches Patentamt

European Patent Office

Office européen des brevets

(11) EP 1 564 918 A1

(12) EUROPEAN PATENT APPLICATION
published in accordance with Art. 158(3) EPC

(43) Date of publication:
17.08.2005 Bulletin 2005/33

(51) Int Cl.⁷: H04B 17/00, H04B 7/26,
G01R 29/00, G01R 31/00

(21) Application number: 03786253.9

(22) Date of filing: 24.12.2003

(86) International application number:
PCT/JP2003/016530

(87) International publication number:
WO 2004/059890 (15.07.2004 Gazette 2004/29)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 24.12.2002 JP 2002372792

(71) Applicant: MATSUSHITA ELECTRIC INDUSTRIAL
CO., LTD.
Kadoma-shi, Osaka 571-8501 (JP)

(72) Inventors:
• INOGAI, Kazunori
Yokohama-shi, Kanagawa 236-0032 (JP)

• IMAMURA, Daichi
Yokosuka-shi, Kanagawa 239-0843 (JP)
• HOSHINO, Masayuki
Yokosuka-shi, Kanagawa 239-0806 (JP)
• OTA, Genichiro
Kanagawa 238-0246 (JP)

(74) Representative: Grünecker, Kinkeldey,
Stockmair & Schwanhäusser Anwaltssozietät
Maximilianstrasse 58
80538 München (DE)

(54) TRANSMISSION PATH SIMULATOR AND RADIO DEVICE EVALUATION METHOD

(57) An output signal of digital baseband processing section 41 is directly input, and receiver noise adding section 103 adds receiver noise simulating the SNR variation due to fading to the signal while keeping an entire signal level constant in single-path channel simulation, while in multipath channel simulation, instantaneous variation adding section 101 and short-term interval variation adding section 102 add only amplitude variations to respective signals of paths, and automatic gain control section 104 keeps a level of the path-combined signal constant, whereby it is possible to evaluate channel performance of digital baseband processing section 41 without waiting for development of radio circuit 53, i.e. without an AGC circuit and AFC circuit in reception system 50.

FIG.2

**Description**

Technical Field

The present invention relates to a channel simulator for simulating a wireless channel to evaluate a wireless apparatus and a method of evaluating the wireless apparatus.

Background Art

Conventionally, in developing a cellular telephone, a base station for the telephone, and MT and AP of wireless LAN, there is needed an apparatus for simulating a wireless channel as an environment for performance evaluation of a development apparatus, i.e. a channel simulator.

By comparing transmission characteristics obtained by providing signals transmitted from a development apparatus with simulated fading and receiver noise using a channel simulator with theoretical values or computer simulation values, it is possible to judge whether the development apparatus performs desired operation. Further, by reproducing a channel state of a running experimental course, it is possible to analyze a failure of a development apparatus occurring under an actual propagation environment. By thus using a channel simulator, characteristic evaluations of a development apparatus can be performed in a room with ease.

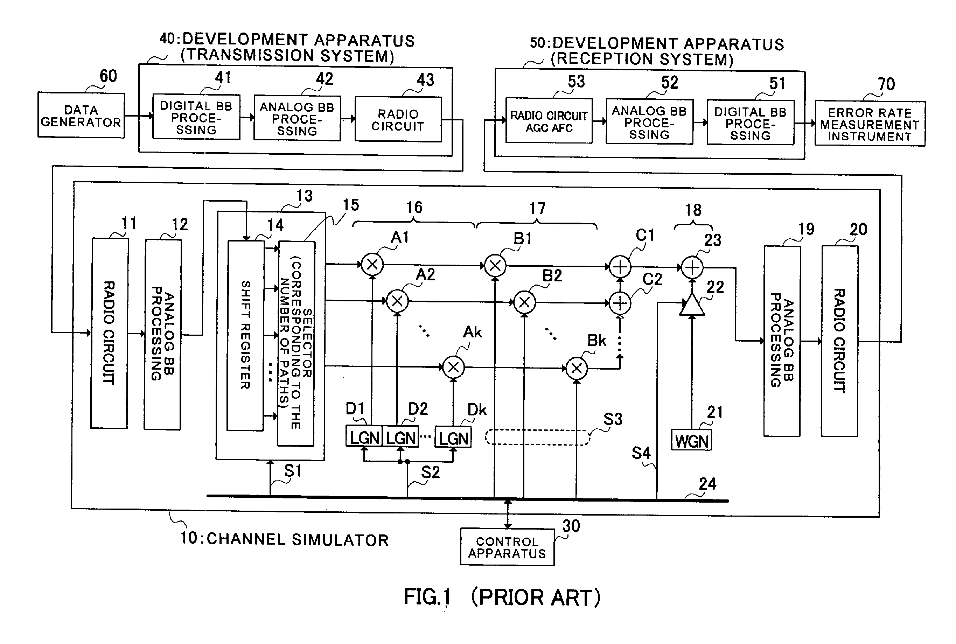

FIG.1 shows an example of a configuration of a conventional channel simulator. In channel simulator 10, a transmission signal output from a transmission system of a development apparatus 40 is passed through a multipath channel configured according to set parameters from control apparatus 30. At this point, a signal passed through each path is given the amplitude variation and phase variation (hereinafter, referred to as propagation path variations) simulating fading, weighted with a gain of each path to be added, and receiver noise is added to the resultant signal. The signal given the propagation path variations and receiver noise by channel simulator 10 is received and demodulated in reception system 50 of the development apparatus, and the demodulated signal is output to error rate measurement instrument 70. Thus, it is possible to evaluate performance of transmission system 40 and reception system 50 of the development apparatus by observing error rate measurement results obtained by adding various propagation path variations and receiver noise using channel simulator 10.

A specific configuration of channel simulator 10 will be described below. Channel simulator 10 is connected to transmission system 40 of the development apparatus comprised of digital baseband processing section (digital BB processing section) 41, analog baseband processing section (analog BB processing section) 42 and radio circuit 43, while being connected to reception system 50 of the development apparatus comprised of radio circuit 53, analog BB processing section 52 and digital BB processing section 51. In addition, in FIG.1, each line represents two baseband signal lines comprised of an I channel (in-phase i.e. the real part of a complex number) and a Q channel (quadrature i.e. the imaginary part of the complex number), except lines for connecting between radio circuits 43 and 11 and between radio circuits 20 and 53.

Digital data generated in data generator 60 is input to channel simulator 10 via digital BB processing section 41, analog BB processing section 42 and radio circuit 43 of transmission system 40. Digital BB processing section 41 is a portion to perform digital modulation, spreading and other processing when transmission system 40 of the development apparatus is a CDMA (Code Division Multiple Access) transmission apparatus, while being a portion to perform digital modulation, inverse Fourier transform and other processing when the system 40 is an OFDM transmission apparatus. Analog BB processing section 42 is a digital/analog conversion circuit, and radio circuit 43 is a portion to perform upconverting, signal amplification, etc.

Channel simulator 10 has radio circuit 11 that performs processing inverse to that in radio circuit 43, i.e. processing such as downconverting, and analog BB processing section 12 comprised of an analog/digital conversion circuit, and converts a signal from transmission system 40 into a digital baseband signal using radio circuit 11 and analog BB processing section 12.

The digital baseband signal is input to multipath signal generating section 13 comprised of shift register 14 and selector 15, and becomes a multipath signal in multipath signal generating section 13. More specifically, shift register 14 shifts the digital baseband signal input thereto by time obtained by dividing the maximum delay time of a path by a sampling cycle of analog BB processing section 12.

Selector 15 selects signals corresponding to the number of paths from among signals output from each shift stage of shift register 14. At this point, multipath instruction signal S1 indicative of the number of paths and delay time of each path designated from control apparatus 30 is input to multipath generating section 13, and shift register 14 and selector 15 operate based on multipath instruction signal S1. In this way, selector 15 in multipath generating section 13 outputs a signal corresponding to each path under multipath environments.

The signal corresponding to each path is output to a respective one of complex multipliers A1 to Ak in instantaneous variation (Rayleigh fading) adding section 16. Complex multipliers A1 to Ak are supplied with complex gaussian noise generated by band-limited complex gaussian noise generating sections (LGN) D1 to Dk, respectively. In addition, eachofband-limitedcomplex gaussian noise generating sections (LGN) D1 to Dk is comprised of a white gaussian noise generating section and a Doppler filter, and generates white gaussian noise limited in band to a range of maximum Doppler frequency S2 input from control apparatus 30. By this means, complex multipliers A1 to Ak output respective signals of paths each provided with the instantaneous variation.

The signals of paths provided with instantaneous variations are output to a plurality of complex multipliers, B1 to Bk, forming short-term interval variation adding section 17. Each of complex multipliers B1 to Bk is supplied with complex gain S3 corresponding to the respective path designated from control apparatus 30, and thus, short-term interval variation adding section 17 outputs a signal of each path provided with shadowing and distance variation. By this means, in channel simulator 10, for each path, a signal is formed which is provided with the instantaneous variation, shadowing and distance variation designated from control apparatus 30, and the signal of each path is all added in adders C1, C2, ..., whereby a multipath signal is formed in which are reflected propagation path variations.

Channel simulator 10 has receiver noise adding section 18 that adds receiver noise to the multipath signal. Receiver noise adding section 18 adds white noise of noise level S4 designated from control apparatus 30 to the multipath signal.

Actually, receiver noise adding section 18 adjusts the white noise generated in white noise generating section 21 to noise level S4 in amplifier 22, adds the adjusted noise to the multipath signal in adder 23, and thereby adds receiver noise. In simulating a single-path channel, multipath signal generating section 13 generates only a signal of a single path, and the signal is given receiver noise in adder 23 without being given the fading variation in complex multipliers A1 and B1.

Analog BB processing section 19 and radio circuit 20 respectively have the same configurations as those of analog BB processing section 42 and radio circuit 43 of transmission system 40, convert a digital BB signal given the propagation path variations and receiver noise, and then, perform radio processing such as upconverting and amplification on the converted signal.

An output signal of channel simulator 10 is input to radio circuit 53 of development apparatus (reception system) 50. Radio circuit 53 has an AGC (Automatic Gain Control) circuit and AFC (Automatic Frequency Control) circuit, and compensates for carrier frequency offset between transmission and reception and input level variations. The signal having undergone analog/digital conversion in analog BB processing section 52 is output to digital BB processing section 51.

Digital BB processing section 51 is a portion to perform digital demodulation, despreading and other processing when development apparatus (reception system) 50 is a CDMA (Code Division Multiple Access) reception apparatus, while being a portion to perform digital demodulation, Fourier transform and other processing when the system 50 is an OFDM reception apparatus. The signal processed in digital BB processing 51 is input to error rate measurement instrument 70, and error rate measurement instrument 70 measures a channel error rate of the signal.

Thus, in channel simulator 10, simulatedmultipath, fading variation and receiver noise assumed to occur on transmission channels are added to radio signals obtained in transmission system 40 of the development apparatus, thus obtained signals are input to reception system 50 of the development apparatus, and error rate characteristics of signals processed in reception system 50 are measured, thereby evaluating transmission characteristics of transmission system 40 and reception system 50.

As described above, in the conventional channel simulator, in such a state that the transmission system and reception system of a development apparatus have been completed to some extent, a radio signal output from the transmission system is given the simulated propagation path variations and receiver noise, and then, supplied to the reception system as a radio signal, and an error rate of data obtained by reception processing in the reception system is measured, whereby performance of the development apparatus is evaluated.

Thus, the conventional channel simulator is predicted on that the development apparatus has been completed to such a state that analog baseband processing sections 42 and 52 and radio circuits 43 and 53 are operable, as well as digital baseband processing sections 41 and 51. In particular, unless development of radio circuit 53 of reception system 50 proceeds to such an extent that the circuit is operable, it is not possible to perform AGC and AFC, and accurate performance evaluations cannot be carried out.

Therefore, it is not possible to check the operation of digital baseband processing sections 41 and 51 performing central processing until completion of radio circuits 43 and 53 (particularly, radio circuit 53 of the reception system 50), and there arises a problem that efficiency in development deteriorates corresponding to waiting for such completion.

Disclosure of Invention

It is an object of the present invention to provide a channel simulator and wireless apparatus evaluation method enabling transmission characteristics of a digital baseband processing section to be evaluated alone with excellence, irrespective of development of a radio circuit.

The object is achieved by providing a channel simulator with a digital signal interface to input a digital baseband signal of a development apparatus, and providing the digital baseband signal with receiver noise simulating the SNR (Signal-to-Noise Ratio) variation due to fading while keeping an entire signal level constant in single-path channel simulation. Further, in multipath channel simulation, the object is achieved by providing respective signals of paths with only amplitude variations due to fading to combine, and keeping a level of the path-combined signal constant to output.

Brief Description of Drawings

FIG.1 is a block diagram illustrating a configuration of a conventional channel simulator;

FIG.2 is a block diagram illustrating a configuration of a channel simulator according to Embodiment 1 of the present invention;

FIG.3 is a block diagram illustrating a configuration of a band-limited complex gaussian noise generating section (LGN);

FIG.4 (A) is a signal waveform chart of a radio signal prior to noise addition;

FIG.4(B) is a signal waveform chart illustrating a general relationship between a signal level and noise level of a radio signal;

FIG.4(C) is a signal waveform chart illustrating a relationship between a signal level and noise level of a radio signal according to Embodiment;

FIG.5 is a block diagram illustrating a configuration of a channel simulator according to Embodiment 2 of the present invention;

FIG.6 is a block diagram illustrating a configuration of a transmission analog adjusting section;

FIG.7 is a block diagram illustrating a configuration of a pseudo power amplifier (PA);

FIG.8 is a block diagram illustrating a configuration of a reception analog adjusting section;

FIG.9 is a diagram illustrating a model of how to add receiver noise on a single-path channel described in Embodiment 1; and

FIG.10 is a diagram illustrating another example of how to add receiver noise on a single-path channel.

Best Mode for Carrying Out the Invention

In this Embodiment, a channel simulator is provided with a digital signal interface to input a digital baseband signal of a development apparatus, and the digital baseband signal is given receiver noise simulating the SNR (Signal-to-Noise Ratio) variation due to fading with an entire signal level kept constant in single-path channel simulation, while in multipath channel simulation, respective signals of paths are given only amplitude variations due to fading and combined to be output with a level of the path-combined signal kept constant. By this means, even if a radio circuit having AFC and AGC has not been completed, it is possible to simulate channel characteristics of a digital baseband processing section at the stage where only the digital baseband processing section has become operable, and it is thereby possible to improve efficiency in development of the wireless apparatus.

In simulating characteristics on a single-path channel, as a constitution to add receiver noise simulating the SNR variation due to fading while keeping a signal level of a digital baseband signal constant, it is considered adding to the digital baseband signal noise of a level corresponding to a level obtained by dividing a noise level by a fading variation value.

Further, in simulating characteristics on a multipath channel, a constitution is considered where multipath signals are formed from the digital baseband signal, respective signals of paths of multipath signals are each given a fading variation, receiver noise is added to a signal obtained by combining the signals, and gain is controlled to keep the signal level almost constant.

Embodiments of the present invention will specifically be described below with reference to accompanying drawings.

(Embodiment 1)

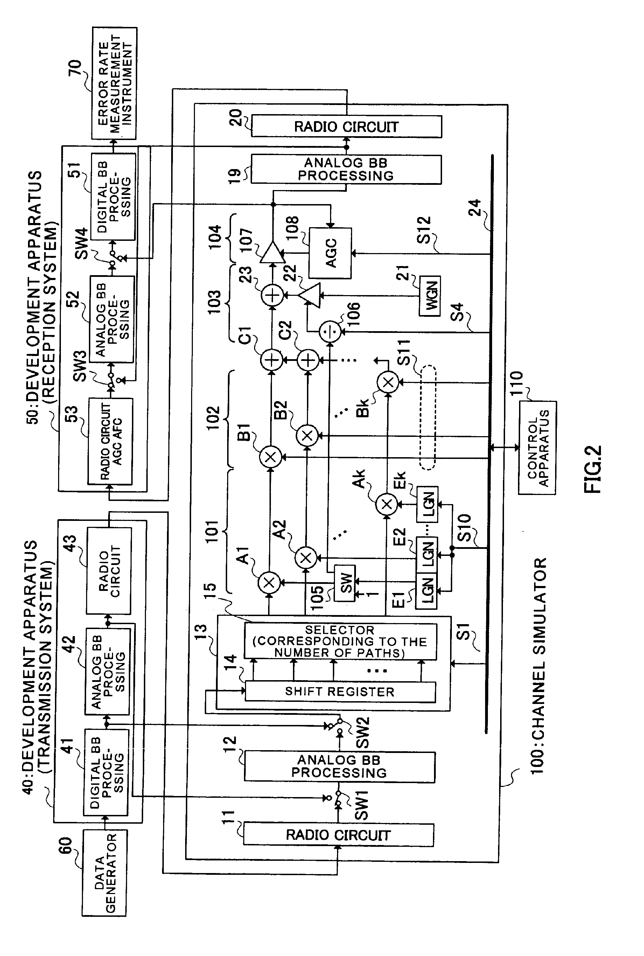

FIG.2 illustrates a configuration of a channel simulator according to Embodiment 1 of the present invention, where the same sections as in FIG. 1 are assigned the same reference numerals as in FIG.1. In addition, descriptions are omitted on the same sections as in FIG. 1. Further, as in FIG.1, each line represents two baseband signal lines comprised of an I channel (in-phase i.e. the real part of a complex number) and a Q channel (quadrature i.e. the imaginary part of the complex number), except lines for output signals from radio circuits 43 and 20.

In channel simulator 100, switch SW1 is provided between radio circuit 11 and analog BB processing section 12, while switch SW2 is provided between analog BB processing section 12 and multipath signal generating section 13. By this means, in channel simulator 100, an output signal from digital BB processing section 41 of transmission system 40 can directly be input via switch SW2, while an output from analog BB processing section 42 of transmission system 40 can directly be input via switch SW1.

As a result, in channel simulator 100, even if development of radio circuit 43 and analog BB processing section 42 has not been completed to be operable, by directly inputting an output signal of digital BB processing section 41 to multipath signal generating section 13 and subsequent circuits via switch SW2, it is possible to evaluate channel characteristics of digital BB processing section 41 independently.

Further, even if development of radio circuit 43 has not been completed to be operable, by inputting an output signal of analog BB processing section 42 via switch SW1, it is possible to evaluate channel characteristics of digital BB processing section 41 and analog BB processing section 42 except radio circuit 43.

Channel simulator 100 has instantaneous variation adding section 101 that adds an instantaneous variation (Rayleigh fading) to an output signal from multipath signal generating section 13, short-term interval variation adding section 102 that adds shadowing and distance variation, receive noise adding section that adds receiver noise such as thermal noise in a receiver, and automatic gain control section 104 that performs gain control on the multipath signal to keep the signal level almost constant.

In instantaneous variation adding section 101, in simulating a multipath channel, a plurality of complex multipliers, A1 to Ak, complex-multiplies signals of paths by band-limited white gaussian noise generated in band-limited complex gaussian noise generating sections (LGN) E1 to Ek, and thereby adds instantaneous variations to the signals of the paths, respectively.

Further, switch (SW) 105 is provided between band-limited complex gaussian noise generating section E1 and complex multiplier A1 in instantaneous variation adding section 101, and either the band-limited white gaussian noise or "1" is selectively input to complex multiplier A1.

Actually, in simulation of multipath channel, switch 105 provides the band-limited white gaussian noise to complex multiplier A1 from band-limited complex gaussian noise generating section E1, while providing a value of "1" to divider 106 of receiver noise adding section 103. Meanwhile, in simulation of single-path channel, switch 105 provides a value of "1" to complex multiplier A1, while providing the band-limited white gaussian noise to divider 106 of receiver noise adding section 103.

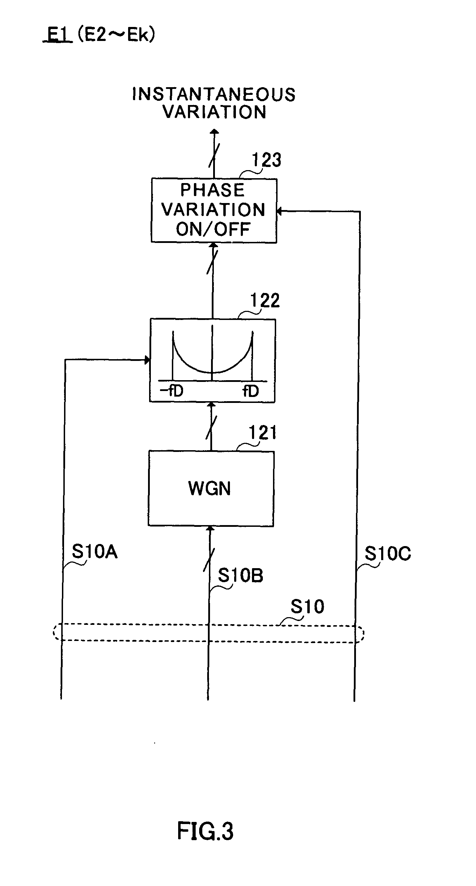

FIG.3 illustrates a configuration of each of band-limited complex gaussian noise generating sections E1 to Ek. Configurations of band-limited complex gaussian noise generating sections E1 to Ek are basically the same as one another, except instantaneous variation initial value S10B which is provided from control apparatus 110 to white gaussian noise generating section (WGN) 121 and varies for each path.

Band-limited complex gaussian noise generating sections E1 to Ek generate white gaussian noise corresponding to instantaneous variation initial value S10B which is provided from control apparatus 110 via white gaussian noise generating section 121. In addition, white gaussian noise generating section 121 generates white gaussian noise of each of the I channel and Q channel (i.e. complex white gaussian noise), and also in subsequent circuits, the complex white gaussian noise is processed.

Doppler filter 122 limits the band of the white gaussian noise corresponding to maximum Doppler frequency fD from control section 110, and outputs band-limited white gaussian noise to phase variation ON/OFF section 123.

Phase variation ON/OFF section 123 controls ON/OFF of phase variation in the band-limited gaussian noise, corresponding to phase variation ON/OFF designation signal S10C from control section 110. More specifically, when receiving phase variation ON/OFF designation signal S10C for designating ON of phase variation, the section 123 outputs the band-limited complex gaussian noise from Doppler filter 122 without processing the noise as an instantaneous variation value.

In contrast thereto, when receiving phase variation ON/OFF designation signal S10C for designating OFF of phase variation, the section 123 obtains variation value envelop amplitude $\sqrt{(I^2+Q^2)}$ of I channel and Q channel band-limited gaussian noise, and outputs the obtained variation value envelop amplitude as signals of the I channel and Q channel. In other words, the section 123 forms the band-limited complex gaussian noise of the I channel and Q channel with the same level as an instantaneous variation value, thereby adding only the level variation without adding the phase variation in complex multipliers A1 to Ak.

In channel simulator 100, short-term interval variation adding section 102 is also capable of selectively adding either a short-term interval variation that does not cause a phase variation or short-term interval variation that causes a phase variation. More specifically, in the case of adding the short-term interval variation that does not cause the phase variation, control apparatus 110 outputs complex gain signal S11 such that the I channel and Q channel have the same values. In the case of adding the short-term interval variation that causes the phase variation, control apparatus 110 outputs complex gain signal S11 such that the I channel and Q channel have different values.

In this way, using instantaneous variation adding section 101 and short-term interval variation adding section 102, channel simulator 100 is capable of selectively providing the digital baseband signal with the instantaneous variation without the phase variation, instantaneous variation with the short-term interval variation or phase variation, and short-term interval variation.

Actually, when development of radio circuit 53 is not completed, since phase compensation cannot be carried out, the digital baseband signal is provided with the instantaneous variation without the phase variation, and short-term interval variation. In contrast thereto, when development of radio circuit 53 is completed, phase compensation can be performed in radio circuit 53, and therefore, the digital baseband signal is provided with the instantaneous variation with the phase variation, and short-term interval variation.

At the time of simulation in multipath channel, in receiver noise adding section 103, a value of "1" is input to divider 106 from switch 105, and therefore, noise level S4 designated from control apparatus 110 becomes a control gain of amplifier 22 without any processing. By this means, the white noise generated in white noise generating section (WGN) 21 becomes a level corresponding to noise level S4, and supplied to adder 23. In other words, in simulation of multipath channel, adder 23 adds the white gaussian noise of the level designated by noise level S4 as receiver noise.

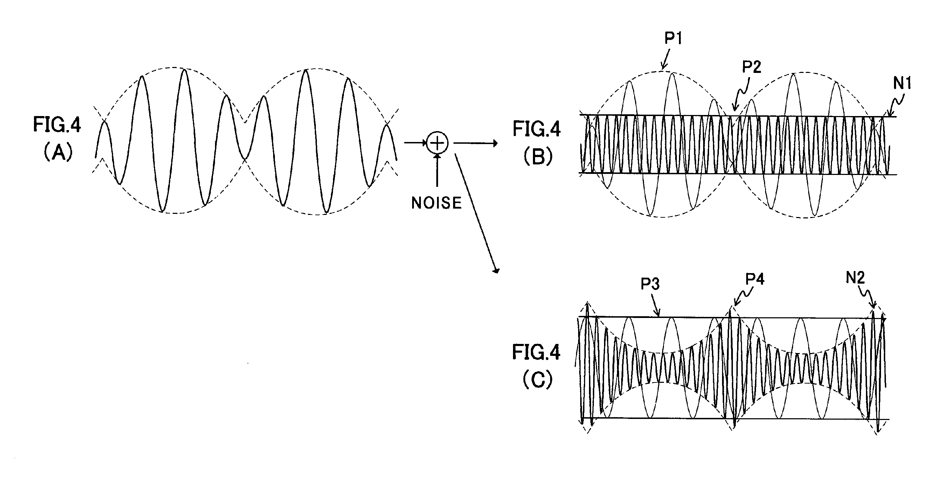

In contrast thereto, at the time of simulation in single-path channel, in receiver noise adding section 103, divider 106 receives as its input band-limited complex gaussian noise generated in band-limited complex gaussian noise generating section E1 via switch 105. Divider 106 divides noise level S4 by the band-limited complex gaussian noise (actually, envelop amplitude value of the band-limited white gaussian noise). The quotient is input to amplifier 22, as a control signal, which varies the amplitude of the white noise from white noise generating section (WGN) 21. By this means, as shown in FIG. 4 (c), adder 23 outputs such a signal that the signal level is constant and the SNR variation due to fading is simulated.

The reason will be described below why receiver noise adding section 103 executes such processing. On an actual single-path channel, a radio signal as shown in FIG.4 (A) is given receiver noise N as shown in FIG.4 (B). Position P1 where SNR is good and position P2 where SNR is poor appear in the received signal. Error rate characteristics are naturally poorer in the position where SNR is poor than in position P1 where SNR is good, due to quantization error, etc.

Receiver noise adding section 103 adds the SNR variation due to the receiver noise, while keeping the signal level constant. Therefore, receiver noise adding section 103 divides noise level S4 by the envelop amplitude of the band-limited white gaussian noise, and adds a value obtained by multiplying the quotient by the white gaussian noise to a baseband signal. It is thus possible to simulate a signal with the same SNR as that of the signal (FIG. 4 (B)) to which the receiver noise is added subsequent to fading, using the signal (FIG.4 (C)) with the constant signal level. For example, positions P3 and P4 in FIG.4(C) respectively have the same SNR as that in corresponding positions in FIG. 4(B), P1 and P2.

In addition, as in instantaneous variation adding section 101 and short-term interval variation adding section 102, receiver noise adding section 103 is capable of selectively providing the digital baseband signal with gaussian noise that does not cause the phase variation or gaussian noise that causes the phase variation. The case of not causing the phase variation as described above can be implemented with ease by making the envelop amplitude of the I channel and Q channel the same.

Thus, receiver noise adding section 103 is provided and adds the receiver noise which simulates the SNR variation due to fading with the entire signal level held constant in simulating a single-path signal, whereby it is possible to measure single-path channel characteristics of digital BB processing section 41 with excellence even when AGC of radio circuit 53 is not available (i.e. radio circuit 53 is not completed).

Automatic gain control section 104 does not operate in simulation of single-path channel, while operating only in simulation of multipath channel. Actually, in simulation of single-path channel, AGC section 108 receives as its input target level S12 for instructing to always set a gain of amplifier 107 at "1" from control apparatus 110, whereby automatic gain control section 104 does not perform AGC processing on the digital baseband signal of single-path, and outputs the signal without any processing. The reason why the automatic gain control processing is not performed on a single-path signal is because the single-path signal is not provided with the level variation in prior circuits, and only provided with the SNR variation in receiver noise adding section 103. However, automatic gain control section 104 does not operate to adjust the variation due to fading or noise, andmaymake a gain adjustment to set the constant level of a signal output from adder 23 at a target level.

In contrast thereto, at the time of simulation of multipath channel, in automatic gain control section 104, control apparatus 110 inputs target level S12 to AGC section 108, andAGC section 108 thereby sets a difference value between target level S12 and an output signal of amplifier 107 as an amplification value of amplifier 107. As a result, automatic gain control section 104 is capable of generating a multipath signal with a constant value of target level S12 by performing simplified digital gain control processing.

The reason why it is necessary to perform gain control on a multipath signal is because the multipath signal resulting from addition by adder C1 is obtained by adding respective signals of paths each provided with the level variation independently of one another, and it is assumed that the level variation occurs in the digital baseband signal. In consideration thereof, the gain control section 104 executes the simplified digital gain control processing to make the level of a multipath signal constant, and it is thereby possible to prevent a bit from being lost in AD conversion in the reception system of the development apparatus even when radio circuit 53 is not completed and the AGC processing cannot be carried out. As a result, it is possible to evaluate channel characteristics on a multipath channel with excellence based on the digital baseband signal of digital BB processing section 41.

In the aforementioned constitution, when development of digital BB processing sections 41 and 51 has been completed to the stage in which the sections are operable, channel simulator 100 receives an output signal of digital BB processing section 41 from switch SW2, and performs a simulation of single-path channel and a simulation of multipath channel separately on the digital baseband signal.

In performing the simulation of a single-path channel, multipath signal generating section 13 forms a single-path digital baseband signal, and inputs the signal to receiver noise adding section 103 via complex multipliers A1 and B1 and adder C1 . At this point, neither instantaneous variation adding section 101 (complex multiplier A1) nor short-term interval variation adding section 102 (complex multiplier B1) adds the phase variation or level variation to the single-path signal.

Receiver noise adding section 103 divides noise level S4 by the envelop amplitude of the band-limited white gaussian noise, adds the white gaussian noise multiplied by the quotient to the baseband signal, and thus provides the signal with the same SNR variation as that caused by fading as the receiver noise without adding the vibration variation nor phase variation. Thus, the digital baseband signal of the constant signal level only provided with the SNR variation is input to digital BB processing section 51 via switch SW4.

Meanwhile, in simulating a multipath channel, multipath signal generating section 13 forms a number of multipath signals with delay time where the number and the delay time is designated by control apparatus 110, and outputs respective signals of paths to complex multipliers A1 to Ak of corresponding rows. Then, instantaneous variation adding section 101 multiplies the signal of each path by the band-limited complex gaussian noise such that only the level variation occurs without the phase variation occurring, i.e. band-limited complex gaussian noise with I and Q components of the same level, and thus adds the instantaneous variation. Short-term interval variation adding section 102 adds complex gain such that only the level variation occurs without the phase variation occurring to the signal of each path given the instantaneous variation.

Respective signals of paths thus given only level variations are all added in adders C1 to C(k-1), and given white noise of designated noise level S4 in receiver noise adding section 103 as the receiver noise. The multipath signal given the receiver noise is made almost constant in signal level in a subsequent section, automatic gain control section 104.

Thus, in either a simulation of signal-path channel or a simulation of multipath channel, channel simulator 100 is capable of forming a signal of almost constant signal level provided with only the SNR variation without the phase variation. As a result, it is possible to excellently evaluate channel performance of digital BB processing sections 41 and 51 without waiting for development of radio circuit 53 having an AGC circuit and AFC circuit.

Actually, in developing digital BB processing sections 41 and 51, there are many cases that development can be advanced smoothly by first evaluating characteristics on a single-path channel, and then evaluating characteristics on a multipath channel. In this Embodiment, evaluations can be carried out on the single-path channel and multipath channel separately, and it is thus possible to further increase efficiency in development.

In channel simulator 100, when development of analog BB processing sections 42 and 52 has been completed, an output signal of analog BB processing section 42 of transmission system 40 is input via switch SW1, while an output signal of analog BB processing section 19 is input to analog BB processing section 52 of reception system 50 via switch SW3. It is thereby possible to evaluate performance of a combination of digital BB processing sections 41 and 51 and analog BB processing sections 42 and 52.

Further, in channel simulator 100, when development of radio circuits 43 and 53 has been completed in addition to analog BB processing sections 42 and 52, an output signal of radio circuit 43 of transmission system 40 is input to radio circuit 11, while an output signal of radio circuit 20 is input to radio circuit 53 of reception system 50. It is thereby possible to evaluate performance of a combination of digital BB processing sections 41 and 51, analog BB processing sections 42 and 52 and radio circuits 43 and 53.

In addition, at the stage where radio circuits 43 and 53 are connected, since AGC function and AFC function operate by radio circuit 53, it may be possible that each of complex multipliers A1 to Ak and B1 to Bk multiplies a noise component such that envelop amplitude differs between the I channel and Q channel and complex gain so as to provide a digital baseband signal with a phase variation. Further, receiver noise adding section 103 and automatic gain control section 104 may be switched to OFF.

According to the aforementioned constitution, an output signal of digital baseband processing section 41 is directly input, and receiver noise simulating the SNR variation due to fading is added with the entire signal level kept constant in single-path channel simulation, while respective signals of paths are provided with only amplitude variations due to fading to be combined with a combined-path signal level kept constant in multipath channel simulation. It is thereby possible to evaluate channel performance of digital baseband processing section 41 without waiting for development of radio circuit 53, i.e. without the AGC circuit and AFC circuit in reception system 50. As a result, it is possible to improve efficiency in development of the wireless apparatus.

The AGC circuit is to form suitable reception amplitude at the point of AD conversion input so as to prevent SN deterioration due to a quantization error. However, it is difficult to ideally operate the circuit under fading because of imperfection in the circuit and control. In an extreme case, the circuit adds an unnecessary amplitude variation. The method of adding variation noise proposed in this Embodiment dose not cause such deterioration, and therefore, enables acquisition of performance in good agreement with theoretical values.

In this Embodiment, in evaluating performance on a single-path channel of a wireless apparatus, a case is described of using receiver noise adding means comprised of band-limited complex gaussian noise generating section (LGN) E1, switch (SW) 105, white gaussian noise generating section (WGN) 21, amplifier 22, adder 23 and divider 106. However, the receiver noise adding means of the present invention is not limited to the aforementioned case, and it is only required to add receiver noise simulating the SNR variation due to fading while keeping the entire signal level constant. For example, a constitution may be applied as in other Embodiment described below.

(Embodiment 2)

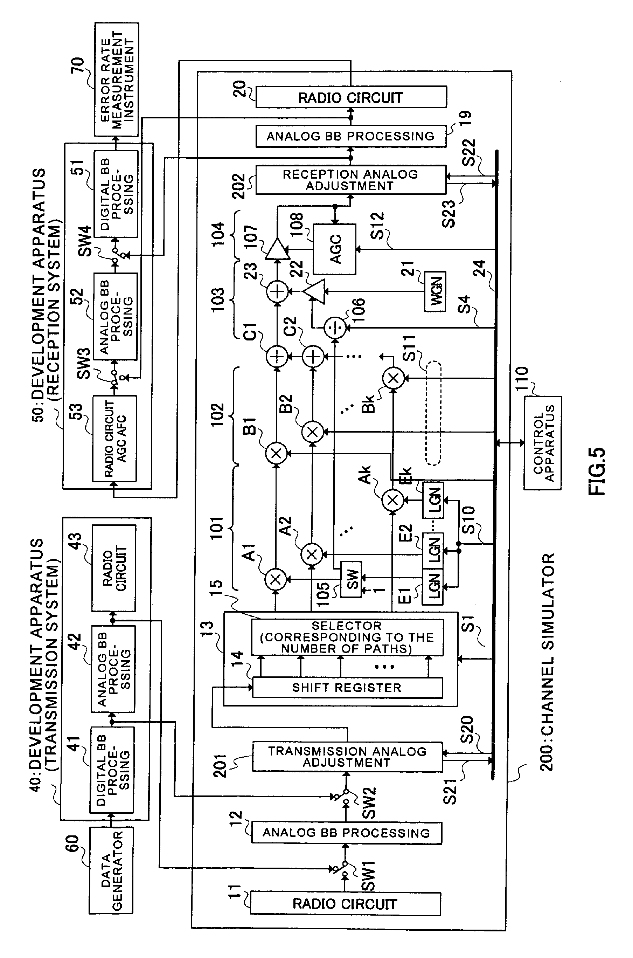

FIG.5 illustrates a configuration of a channel simulator according to Embodiment 2 of the present invention, where the same sections as in FIG.2 are assigned the same reference numerals as in FIG.2. Channel simulator 200 of this Embodiment has the same configuration as that of channel simulator 100 of Embodiment 1 except transmission analog adjusting section 201 being provided before multipath signal generating section 13 and reception analog adjusting section 202 being provided after automatic gain control section 104.

By this means, in channel simulator 200, an output signal of digital BB processing section 41 is input via transmission analog adjusting section 201, the same channel simulation as in Embodiment 1 is performed on the signal processed in transmission analog adjusting section 201, and the signal subjected to the same channel simulation as in Embodiment is processed in reception analog adjusting section 202 and then, output to digital BB processing section 51 of reception system 50.

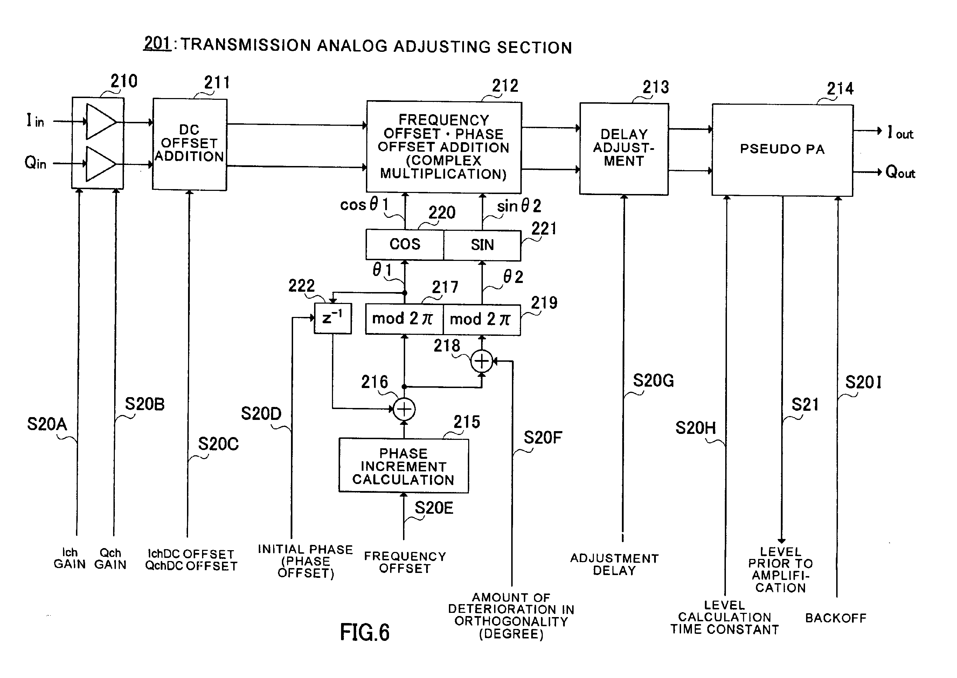

Transmission analog adjusting section 201 has a digital circuit configuration as shown in FIG.6, implements simulations of the function of radio circuit 43 corresponding to various set values S20A to S20I input from control apparatus 110, and adds simulated signal deterioration assumed to occur in radio circuit 43 to the digital baseband signal.

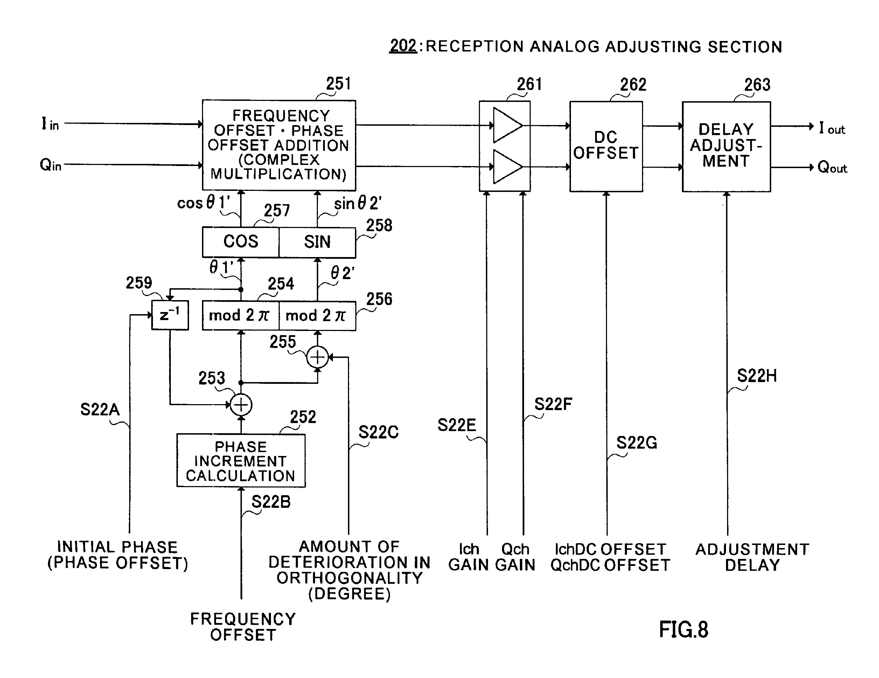

Reception analog adjusting section 202 has a digital circuit configuration as shown in FIG.8, implements simulations of the function of radio circuit 53 corresponding to various set values S22A to S22H input from control apparatus 110, and adds simulated signal deterioration assumed to occur in radio circuit 53 to the digital baseband signal.

By this means, in channel simulator 200, even if development of radio circuit 43 of transmission system 40 and radio circuit 53 of reception system 50 has not been completed, it is possible to add signal deterioration assumed to occur in radio circuits 43 and 53 to the digital baseband signal to evaluate performance of digital BB processing sections 41 and 51.

As a result, it is possible to evaluate channel characteristics of digital BB processing sections 41 and 51 including appropriateness between digital BB processing sections 41 and 51 and radio circuits 43 and 53. Further, it is possible to beforehand measure an extent of deterioration to occur in radio circuits 43 and 53 subsequently developed with the performance of digital BB processing sections 41 and 51 meeting a desired value.

Configurations of transmission analog adjusting section 201 and reception analog adjusting section 202 will specifically be described below. As shown in FIG. 6, in transmission analog adjusting section 201, an output signal from digital BB processing section 41 is input to gain unbalance generating section 210. Gain unbalance generating section 210 amplifies the I channel signal and Q channel signal of the digital baseband signal independently, and thereby generates a gain difference. DC offset adding section 211 increases or decreases each of the I channel signal and Q channel signal by a constant value, and thereby adds the DC offset.

Frequency offset · phase offset adding section 212 adds the frequency offset and phase offset assumed to occur in radio circuit 43 to the I channel signal and Q channel signal. Actually, frequency offset · phase offset adding section 212 is comprised of a complex multiplier which multiplies each channel signal by variation amount $\cos \theta_1$ or $\sin \theta_2$ respectively corresponding to instantaneous phase $\theta_1$ or $\theta_2$.

In other words, the I channel signal is multiplied by variation amount $\cos \theta_1$, while the Q channel signal is multiplied by variation amount $\sin \theta_2$. Herein, instantaneous phases $\theta_1$ and $\theta_2$ being constant means only adding the phase offset, while instantaneous phases $\theta_1$ and $\theta_2$ varying with time means adding the frequency offset in addition to the phase offset.

In obtaining instantaneous phases θ1 and θ2, transmission analog adjusting section 201 calculates a phase rotation amount per sample from frequency offset set value S20E in phase increment calculating section 215 to output to mod 2π calculating circuits 217 and 219. At this point, to add deterioration in orthogonality between the I channel signal and Q channel signal, adder 218 adds orthogonality deterioration amount S20F to a phase rotation amount of the Q channel signal.

A phase of the last sample is input to adder 216. The phase of the last sample is calculated by Z-1 calculating circuit 222 performing computation based on an initial phase (i.e. phase offset) S20D and the phase of the last sample. Adder 216 adds the phase rotation amount corresponding to one sample calculated in phase increment calculating circuit 215 to the phase of the last sample, and thereby obtains a phase rotation amount of a current sample.

Thus, by repeating a processing loop of adder 216, mod 2π calculating circuit 217 and Z-1 calculating circuit 222, I channel instantaneous phase θ1 provided with the phase offset and frequency offset is calculated for each sample, and Q channel instantaneous phase θ2 is calculated by adding the deterioration amount of orthogonality to I channel instantaneous phase θ1.

Then, frequency offset · phase offset adding section 212 adds variation amount cos θ1 and variation amount sin θ2 respectively to the I channel and Q channel of the digital baseband signal, and thereby adds the frequency offset and phase offset on each channel of the digital baseband signal assumed to occur in radio circuit 43 of transmission system 40. Delay adjusting section 213 adds a circuit delay amount assumed to occur in radio circuit 43.

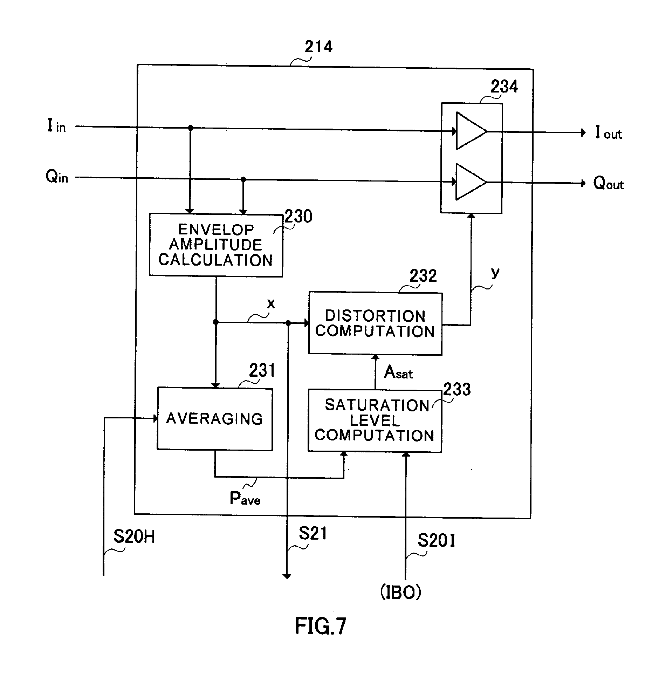

Pseudo power amplifier (PA) section 214 is to generate simulated non-linear distortion assumed to occur in an amplifying section of radio circuit 43, and for example, is configured as shown in FIG.7. Pseudo PA section 214 calculates $\sqrt{(I^2+Q^2)}$ in envelop amplitude calculating section 230, and thereby calculates envelop amplitude X of the digital baseband signal to output to averaging circuit 231 and distortion calculating section 232.

Averaging circuit 231 averages the envelop amplitude for a time corresponding to a forgetting factor (i.e. level calculation time constant) set by control apparatus 110, and outputs obtained average value Pave to saturation level computation circuit 233. Saturation level computation circuit 233 obtains saturation level Asat in the following equation assuming the average value of envelop amplitude as Pave and backoff of the power amplifier set in control apparatus 110 as IBO.

$$A_{sat} = P_{ave} \times 10^{-\frac{IBO}{20}} \qquad (1)$$

Distortion computation section 232 calculates a control value of amplifier 234 in the following equation using the envelop amplitude value X obtained in envelop amplitude calculating circuit 230 and saturation level Asat obtained in saturation level computation circuit 233.

$$\text{Control value} = \frac{1}{\left\{1 + \left(\frac{|x|}{A_{sat}}\right)^{10}\right\}^{\frac{1}{10}}} \qquad \cdots\cdots (2)$$

In this way, pseudo power amplifier (PA) section 214 is capable of adding simulated non-linear distortion assumed to occur in the amplifying section of radio circuit 43 to the digital baseband signal.

Reception analog adjusting section 202 is configured as shown in FIG.8. In reception analog adjusting section 202, the digital baseband signal output from automatic gain control section 104 is input to frequency offset · phase offset adding section 251.

Frequency offset · phase offset adding section 251 performs the same processing as in frequency offset · phase offset adding section 212 of transmission analog adjusting section 201. In other words, the section 251 adds the frequency offset and phase offset assumed to occur in radio circuit 53 of reception circuit 50 to I and Q channels. Actually, frequency offset · phase offset adding section 251 is comprised of a complex multiplier which multiplies each channel signal by variation amount cos θ1' or sin θ2' respectively corresponding to instantaneous phase cos θ1' or sin θ2'. In other words, the I channel signal is multiplied by variation amount cos θ1', while the Q channel signal is multiplied by variation amount sin θ2'.

In obtaining instantaneous phases θ1' and θ2', reception analog adjusting section 202 calculates a phase rotation amount per sample from frequency offset set value S22B in phase increment calculating section 252 to output to mod 2π calculating circuits 254 and 256. At this point, to add deterioration in orthogonality between the I channel signal and Q channel signal, adder 255 adds orthogonality deterioration amount S22C to a phase rotation amount of the Q channel signal.

A phase of the last sample is input to adder 253. The phase of the last sample is calculated by Z-1 calculating circuit 259 performing computation based on an initial phase (i.e. phase offset) S22A and the phase of the last sample. Adder 253 adds the phase rotation amount corresponding to one sample calculated in phase increment calculating circuit 252 to the phase of the last sample, and thereby obtains a phase rotation amount of a current sample.

Then, frequency offset · phase offset adding section 251 adds variation amount cos θ1' and variation amount sin θ2' respectively to the I channel and Q channel of the digital baseband signal, and thereby adds the frequency offset and phase offset on each channel of the digital baseband signal assumed to occur in radio circuit 53 of reception system 50.

Gain unbalance generating section 261 amplifies the I channel signal and Q channel signal of the digital baseband signal independently, and thereby generates a gain difference. DC offset adding section 262 increases or decreases each of the I and Q channels by a constant value, and thereby adds the DC offset. Delay adjusting section 263 adds a circuit delay amount assumed to occur in radio circuit 53.

A user is capable of selecting arbitrarily via control apparatus 110 various set values S20 (S20A to S20I) and S22 (S22A to S22H) of transmission analog adjusting section 201 and reception analog adjusting section 202, as well as other set values S1, S4, S10, S11 and S12.

Thus, it is possible to simulate gain unbalance, DC offset, frequency offset, phase offset, circuit delay, non-linear distortion in amplification, or the like assumed to occur in radio circuits 43 and 53, prior to completion of radio circuit 43 of transmission system 40 and radio circuit 53 of reception system 50, i.e. at the stage where digital BB processing sections 41 and 51 have only been completed. It is thereby possible to evaluate characteristics of digital BB processing sections 41 and 51 in combining digital BB processing sections 41 and 51 under development and radio circuits 43 and 53 with various characteristics.

According to the aforementioned configuration, in addition to the configuration of Embodiment 1, transmission analog adjusting section 201 and reception analog adjusting section 202 are provided, where the section 201 simulates signal deterioration in radio circuit 43 of transmission system 40 by digital processing, while the section 202 simulates signal deterioration in radio circuit 53 of reception system 50 by digital processing. It is thus possible to implement channel simulator 200 enabling further detailed evaluations of characteristics of the digital baseband processing sections prior to completion of development of radio circuits 43 and 53.

(Other Embodiment)

In addition, in the aforementioned Embodiments, as shown in FIG.2, in simulating characteristics on a single-path channel, the case is described where by adding, to a digital baseband signal, noise of a level corresponding to a level obtained by dividing a noise level by a fading variation value, receiver noise simulating the SNR variation due to fading is added with the signal level of a digital baseband signal kept constant. However, a configuration to implement the present invention is not limited to that as shown in FIG.2.

Described below is an example of another configuration to add receiver noise simulating the SNR variation due to fading, while keeping the signal level of a digital baseband signal constant.

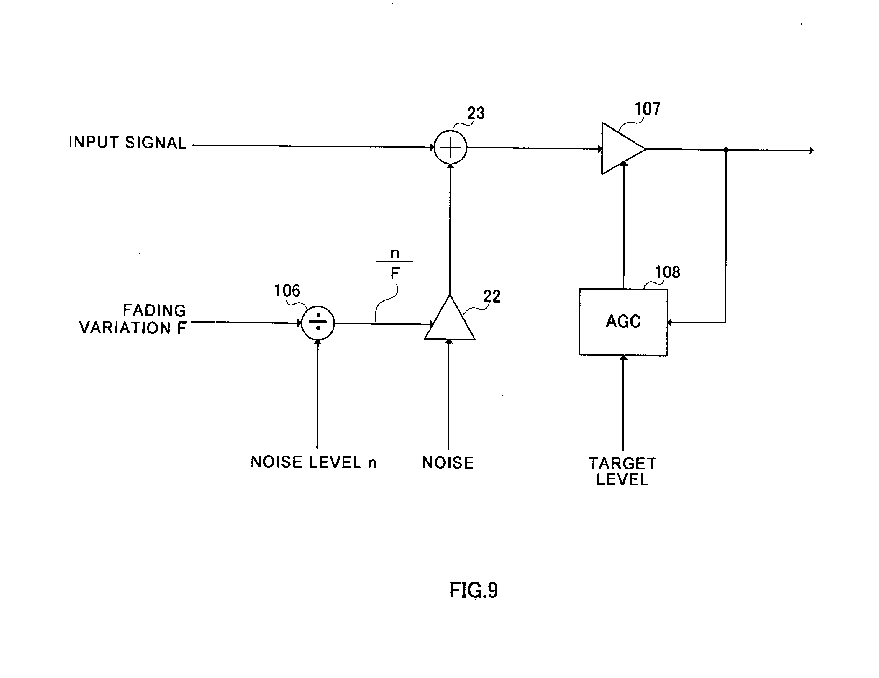

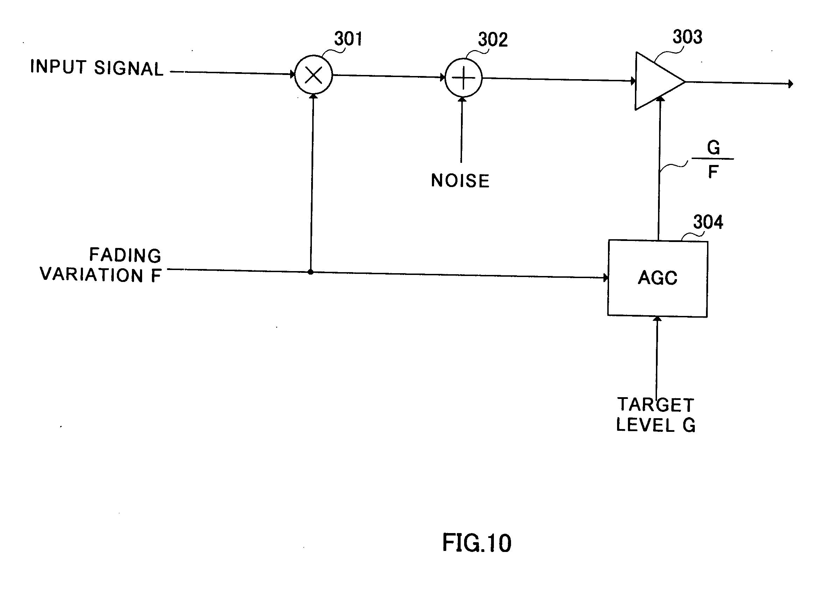

FIG.9 illustrates a model of how to add receiver noise on a single-path channel described in Embodiment 1 as described above. FIG.10 illustrates an example of another configuration. Receiver noise adding means in FIG.10 adds a level variation due to fading to an input signal by multiplier 301 as fading variation adding means. Further, adder 302 adds noise as noise adding means. A level of the signal provided with fading and noise by amplifier 303 and AGC section 304 as gain adjusting means is adjusted using a gain that is the reciprocal of the fading variation value. By this means, as in Embodiment 1, it is possible to add receiver noise simulating the SNR variation due to fading while keeping the signal level of a digital baseband signal constant. In other words, it is possible to obtain an output signal as shown in FIG.4(C). In addition, an output of amplifier 303 is not returned to AGC section 304 in the example in FIG.10, but such feedback may be carried out.

The present invention is not limited to the aforementioned Embodiments, and is capable of being carried into practice with various modifications thereof.

A channel simulator according to an aspect of the present invention is a channel simulator to evaluate characteristics on a single-path channel of a wireless apparatus that is a development apparatus, and adopts a configuration provided with an input section that inputs an output signal of a digital baseband processing section provided in a transmission system of the development apparatus, and a receiver noise adding section that adds receiver noise simulating the SNR variation due to fading to the signal input via the input section , while keeping an entire signal level constant.

According to this configuration, the digital baseband signal is directly input from the input section, and therefore, performance deterioration does not occur due to an analog circuit. Then, using the receiver noise adding section, only the SNR variation due to fading is added as a noise level variation, without adding any variation to the signal. It is thereby possible to measure characteristics of the case where AGC and AFC ideally operates, and to compare with theoretical characteristics or computer simulation results to study. As a result, it is possible to evaluate performance of the digital baseband processing section using only a digital baseband signal without an AGC circuit and AFC circuit, and to improve efficiency in development of the wireless apparatus.

A channel simulator according to an aspect of the present invention adopts a configuration where noise of a level corresponding to a level obtained by dividing a noise level by a fading variation value to the signal input via the input section.

A channel simulator according to an aspect of the present invention adopts a configuration provided with a fading variation adding section that adds a level variation due to fading to the signal input via the input section, a noise adding section that adds noise to the signal input via the input section, and a gain adjusting section that adjusts a level of the signal given fading and noise by the fading variation adding section and the noise adding section, using a gain that is the reciprocal of the fading variation value.

According to these configurations, it is possible to excellently execute the processing for adding, to the digital baseband signal, a noise level simulating the SNR variation due to fading, while keeping the entire signal level constant.

A channel simulator according to an aspect of the present invention is a channel simulator to evaluate characteristics on a multipath channel of a wireless apparatus that is a development apparatus, and adopts a configuration provided with an input section that inputs an output signal of a digital baseband processing section of a transmission system of the development apparatus, a multipath signal forming section that forms a signal corresponding to a signal of each path from the signal input via the input section, a fading variation adding section that adds only a level variation due to fading to the signal of each path of a multipath signal, an adding section that adds the signal of each path given a fading variation, a receiver noise adding section that adds receiver noise to an added signal obtained in the adding section, and a gain control section that performs gain control such that a level of the signal provided with the receiver noise is constant.

According to this configuration, the digital baseband signal is directly input from the input section, the fading variation adding section adds only the level variation due to fading to the signal of each path, the gain control section makes a level correction so as not to loose a bit in AD conversion in the reception system of the development apparatus after adding the receiver noise, and it is thereby possible to measure characteristics of the time AFC and AGC almost ideally operates on each path even when a radio circuit of the reception system of the development apparatus is not present. As a result, it is possible to evaluate performance of the digital baseband processing section only using a digital baseband signal without the AGC circuit and AFC circuit. It thus becomes possible to evaluate characteristics of the digital baseband processing section without the radio circuit, thereby enabling improved efficiency in development.

A channel simulator according to an aspect of the present invention adopts a configuration further provided with a second input section that inputs an output signal from an analog baseband processing section provided subsequent to the digital baseband processing section of the development apparatus, and an analog baseband processing section that converts an analog baseband signal input from the second input section into a digital baseband signal, where the receiver noise adding section adds the receiver noise component to the digital baseband signal obtained in the analog baseband processing section.

A channel simulator according to an aspect of the present invention adopts a configuration further provided with a second input section that inputs an output signal from an analog baseband processing section provided subsequent to the digital baseband processing of the development apparatus, and an analog baseband processing section that converts an analog baseband signal input from the second input section into a digital baseband signal, where the multipath signal forming section forms a multipath signal from the digital baseband signal obtained in the analog baseband processing section.

According to these configurations, it is possible to evaluate characteristics in a combination of the digital baseband processing section and the analog baseband processing section. It is thus possible to evaluate performance of the time the analog baseband processing section becomes operable, in addition to the digital baseband processing section.

A channel simulator according to an aspect of the present invention adopts a configuration further provided with an analog adjusting section that is comprised of a digital circuit and that adds a noise component simulating signal deterioration in a radio circuit of the development apparatus to the digital baseband signal, corresponding to an input set value.

According to this configuration, in evaluating performance of the digital baseband processing section at the stage where development of the radio circuit is not completed, it is possible to carry out performance evaluations in consideration of signal deterioration in the radio circuit, and it becomes possible to further specifically evaluate characteristics of the digital baseband processing section prior to completion of development of the radio circuit.

A wireless apparatus evaluation method of an aspect of the present invention is a method of evaluating a wireless apparatus to evaluate performance on a single-path channel of the wireless apparatus that is a development apparatus, where receiver noise simulating the SNR variation due to fading is added to a digital baseband signal of the wireless apparatus with a level of the signal kept constant, and performance on the single-path channel of the wireless apparatus is evaluated based on the signal provided with the receiver noise.

A wireless apparatus evaluation method of an aspect of the present invention is a method of evaluating a wireless apparatus to evaluate characteristics on a multipath channel of the wireless apparatus that is a development apparatus, where a multipath signal is formed from a digital baseband signal of the wireless apparatus, a signal of each path of the multipath signal is given the fading variation simulating a level variation due to fading, the signal of each path given the fading variation is added, receiver noise is added to an added signal, gain control is performed on the signal provided with the receiver noise so that a level of the signal is constant, and performance on the multipath channel of the wireless apparatus is evaluated based on the signal subjected to gain control.

According to these methods, it is possible to evaluate channel characteristics of a digital baseband processing section using only a digital baseband signal without an AGC circuit and AFC circuit, i.e. without a radio circuit, and it is thereby possible to improve efficiency in development of the wireless apparatus.

As described above, according to the present invention, an output signal of the digital baseband processing section is directly input, receiver noise simulating the SNR variation due to fading is added with the entire signal level kept constant in single-path channel simulation, while respective signals of paths are provided with only amplitude variations due to fading to be combined with a level of the path-combined signal kept constant in multipath channel simulation. It is thereby possible to evaluate performance of the digital baseband processing section without waiting for development of a radio circuit. As a result, it is possible to improve efficiency in development of wireless apparatuses.

This application is based on the Japanese Patent Application No.2002-372792 filed on December 24, 2002, entire content of which is expressly incorporated by reference herein.

Industrial Applicability

The present invention is suitable for use in developing, for example, a cellular telephone, base station of the cellular telephone, and MT (Mobile Terminal) and AP (Access Point) of wireless LAN (Local Area Network).

**Claims**

1. A channel simulator to evaluate characteristics on a single-path channel of a wireless apparatus that is a development apparatus, comprising:

   an input section that inputs an output signal of a digital baseband processor provided in a transmission system of the development apparatus; and
   a receiver noise adder that adds receiver noise simulating an SNR variation due to fading to the signal input via the input section, while keeping an entire signal level constant.

2. The channel simulator according to claim 1, wherein the receiver noise adder adds noise of a level corresponding to a level obtained by dividing a noise level by a fading variation value to the signal input via the input section.

3. The channel simulator according to claim 1, wherein the receiver noise adder comprises:

   a fading variation adder that adds a level variation due to fading to the signal input via the input section;
   a noise adder that adds noise to the signal input via the input section; and
   a gain adjuster that adjusts a level of the signal given fading and the noise by the fading variation adder and the noise adder, using a gain that is the reciprocal of a fading variation value.

4. A channel simulator to evaluate characteristics on a multipath channel of a wireless apparatus that is a development apparatus, comprising:

   an input section that inputs an output signal of a digital baseband processor of a transmission system of the development apparatus;
   a multipath signal former that forms a signal corresponding to a signal of each path from the signal input via the input section;
   a fading variation adder that adds only a level variation due to fading to the signal of each path of a multipath signal;
an adder that adds the signal of each path given a fading variation;
a receiver noise adder that adds receiver noise to an added signal obtained in the adder; and
a gain controller that performs gain control such that a level of the signal provided with the receiver noise is constant.

**5.** The channel simulator according to claim 1, further comprising:

a second input section that inputs an output signal from an analog baseband processor provided subsequent to the digital baseband processor of the development apparatus; and
an analog baseband processor that converts an analog baseband signal input from the second input section into a digital baseband signal,

wherein the receiver noise adder adds a receiver noise component to the digital baseband signal obtained in the analog baseband processor.

**6.** The channel simulator according to claim 4, further comprising:

a second input section that inputs an output signal from an analog baseband processor provided subsequent to the digital baseband processor of the development apparatus; and
an analog baseband processor that converts an analog baseband signal input from the second input section into a digital baseband signal,

wherein the multipath signal former forms a multipath signal from the digital baseband signal obtained in the analog baseband processor.

**7.** The channel simulator according to any one of claims 1 to 6, further comprising:

an analog adjuster that is comprised of a digital circuit and that adds a noise component simulating signal deterioration in a radio circuit of the development apparatus to the digital baseband signal, corresponding to an input set value.

**8.** A method of evaluating a wireless apparatus to evaluate performance on a single-path channel of the wireless apparatus that is a development apparatus, comprising:

adding receiver noise simulating an SNR variation due to fading to a digital baseband signal of the wireless apparatus, while keeping a level of the signal constant; and
evaluating performance on the single-path channel of the wireless apparatus based on the signal provided with the receiver noise.

**9.** A method of evaluating a wireless apparatus to evaluate performance on a multipath channel of the wireless apparatus that is a development apparatus, comprising:

forming a multipath signal from a digital baseband signal of the wireless apparatus;
adding a fading variation simulating a level variation due to fading to a signal of each path of the multipath signal;
adding the signal of each path given the fading variation;
adding receiver noise to an added signal;
performing gain control on the signal provided with the receiver noise so that a level of the signal is constant; and
evaluating performance on the multipath channel of the wireless apparatus based on the signal subjected to gain control.

40:DEVELOPMENT APPARATUS
(TRANSMISSION SYSTEM)

50:DEVELOPMENT APPARATUS
(RECEPTION SYSTEM)

60
DATA GENERATOR

41
DIGITAL BB PROCE-SSING

42
ANALOG BB PROCE-SSING

43
RADIO CIRCUIT

53
RADIO CIRCUIT AGC AFC

52
ANALOG BB PROCE-SSING

51
DIGITAL BB PROCE-SSING

70
ERROR RATE MEASUREMENT INSTRUMENT

11
RADIO CIRCUIT

12
ANALOG BB PROCESSING

13
14
SHIFT REGISTER

15
SELECTOR (CORRESPONDING TO THE NUMBER OF PATHS)

16
A1
A2
Ak

17
B1
B2
Bk

C1
C2

18
23
22

D1
D2
Dk
LGN LGN ... LGN

S3
S4

S1
S2
24

21
WGN

19
ANALOG BB PROCESSING

20
RADIO CIRCUIT

30
CONTROL APPARATUS

10:CHANNEL SIMULATOR

FIG.1 (PRIOR ART)

EP 1 564 918 A1

FIG.2

E1 (E2~Ek)

INSTANTANEOUS
VARIATION

123

PHASE
VARIATION
ON/OFF

122

−fD    fD

121

WGN

S10A          S10B          S10C

S10

FIG.3

FIG.4 (A)

FIG.4 (B)

FIG.4 (C)

NOISE

FIG.5

201: TRANSMISSION ANALOG ADJUSTING SECTION

FIG.6

FIG.7

EP 1 564 918 A1

FIG.8

INPUT SIGNAL

23

107

$\dfrac{n}{F}$

106

FADING
VARIATION F

22

108

AGC

NOISE LEVEL n

NOISE

TARGET
LEVEL

FIG.9

FIG.10

EP 1 564 918 A1

| INTERNATIONAL SEARCH REPORT | International application No. |
| --- | --- |
| | PCT/JP03/16530 |

A.  CLASSIFICATION OF SUBJECT MATTER
   Int.Cl⁷  H04B17/00, H04B7/26, G01R29/00, G01R31/00

According to International Patent Classification (IPC) or to both national classification and IPC

B.  FIELDS SEARCHED

Minimum documentation searched (classification system followed by classification symbols)
   Int.Cl⁷  H04B17/00, H04B7/26, G01R29/00, G01R31/00

Documentation searched other than minimum documentation to the extent that such documents are included in the fields searched

| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 11-032015 A  (Kokusai Electric Co., Ltd.), 02 February, 1999 (02.02.99), Page 3, upper right column, line 21 to page 5, left column, line 31; Fig. 1 (Family: none) | 1-9 |

| ☐ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 April, 2004 (05.04.04) | 20 April, 2004 (20.04.04) |

| Name and mailing address of the ISA/ | Authorized officer |
| --- | --- |
| Japanese Patent Office | |
| Facsimile No. | Telephone No. |

Form PCT/ISA/210 (second sheet) (July 1998)